# EUROPÄISCHE PATENTSCHRIFT

(11) **EP 4 038 240 B1**
(45) Veröffentlichungstag und Bekanntmachung des Hinweises auf die Patenterteilung: **14.08.2024**
(21) Anmeldenummer: 20796698.7
(22) Anmeldetag: 02.10.2020
(51) Int. Cl.: E02D 27/42, F03D 13/20

(54) **FUNDAMENT FÜR EINE WINDKRAFTANLAGE**
FOUNDATION FOR A WIND TURBINE
FONDATION POUR TURBINE D'ÉOLIENNE

(30) Priorität: 02.10.2019 DE 102019126558
(43) Veröffentlichungstag der Anmeldung: 10.08.2022
(73) Patentinhaber: Smart & Green Mukran Concrete GmbH, 18546 Sassnitz (DE)
(72) Erfinder: SCHRIEFER, Christoph, 19230 Redefin (DE); PRASS, Gregor, 22455 Hamburg (DE)
(74) Vertreter: Klickow & Wetzel PartGmbB
(86) Internationale Anmeldenummer: PCT/EP2020/077693
(87) Internationale Veröffentlichungsnummer: WO 2021/064190

(56) Entgegenhaltungen:
- WO-A2-2004/101898
- DE-A1- 102018 112 857
- US-B1- 6 229 497

## Beschreibung

Die Erfindung betrifft ein Fundament für eine Windkraftanlage wie grundsätzlich aus der DE 10 2018 1128 57 A1 oder der WO 2004/1018 98 A2 bekannt, mit einem ersten, am Errichtungsort im Wesentlichen aus Beton gegossenen, sockelartigen Abschnitt mit wenigstens einem darin befindlichen und mit vor Ort eingegossenen Turmbefestigungselement, auf dem ein Turm der Windkraftanlage anordbar ist und mit denen der Turm der Windkraftanlage verbindbar ist, und einem zweiten sich im Wesentlichen horizontal erstreckenden Abschnitt als flächiger Fundamentkörper, wobei der zweite Abschnitt in Verbindung mit dem ersten Abschnitt angeordnet ist, und wobei der zweite Abschnitt des Fundament im Wesentlichen wenigstens aus drei vorgefertigten Horizontalelementen, bevorzugt aus bewehrtem Beton. Weiterhin betrifft die Erfindung ein Verfahren zur Errichtung eines Fundaments für eine Windkraftanlage.

Fundamente für Windkraftanlagen werden im Wesentlichen als In-Situ-Betonfundamente ausgeführt. Dafür wird am Errichtungsort eine Grube ausgehoben, diese wird mit einer Sauberkeitsschicht versehen. Anschließend werden die Schalung und die Bewehrung errichtet und das Ganze mit Beton vor Ort gefüllt. Dabei wird ein flächiger Körper ggf. mit einem Sockel errichtet, siehe beispielsweise US 20160369520 A1. Neben dem Transportaufwand durch die Lieferung des Betons, der Schalung und der Bewehrung ist dieses vor Ort sehr arbeits- und zeitintensiv. Auch ist die Qualitätssicherung aufwendig bzw. je nach Witterung auch problembehaftet. Weiterhin ist der Rückbau nach dem Ende der Lebensdauer der Windkraftanlage teuer und sehr aufwendig.

Weiterhin gibt es prinzipiell Bedarf, Fundamente von Windkraftanlagen aus vorgefertigten Elementen zu errichten, womit die vorgenannten Probleme reduziert bzw. eliminiert werden könnten. Prinzipiell ist vorteilhaft, dass bei einem Vorfertigen die Bauteile unter definierten Bedingungen standardisiert produziert werden können. Auch reduziert sich der Arbeitsaufwand vor Ort. Hierfür wurden verschiedene Ansätze im Stand der Technik beschrieben.

Beispielsweise zeigt WO 2008/036934 A2 eine Kombination aus vorgefertigten Elementen und klassischem Schalungs-/Bewehrungsbau. EP 22563387 A1 offenbart ein Fundament für eine Windkraftanlage. Es wird aus vorgefertigten Betonteilen nach einer entsprechenden Anlieferung vor Ort ein Fundament errichtet. Es enthält einen flächigen Abschnitt und einen sockelartigen Abschnitt. Die Rippen weisen horizontal vorspringende Ankerelemente auf, die sich im montierten Zustand radial in das Zentrum des Fundaments erstrecken. Unterhalb und oberhalb der Anker sind Platten vorgesehen. In den so gebildeten Hohlraum wird der Ortbeton eingebracht, um die Anker miteinander zu verbinden und einen Zentralkörper zu bilden. Dadurch werden die zuvor genannten Nachteile nur unwesentlich reduziert.

Aufgabe der Erfindung ist daher, die vorgenannten Nachteile zu überwinden und Fundamente für Windkraftanlagen, insbesondere für Windkraftanlagen mit Betontürmen, aus vorgefertigten Elementen wirtschaftlich errichtbar zu machen.

Gelöst wird die erfindungsgemäße Aufgabe hinsichtlich des Fundaments durch die kombinierten technischen Merkmale des Anspruchs 1 und insbesondere durch die kennzeichnenden Merkmale dieses Anspruchs.

Hinsichtlich des Verfahrens wird die erfindungsgemäße Aufgabe durch die Schritte laut Anspruch 5 gelöst.

Hierdurch lassen sich die vorgenannten Fundamente hinsichtlich Montage und Materialaufwand deutlich vereinfachen. Insbesondere ist es möglich, mit einem Horizontalelementtyp Fundamente für unterschiedliche Turmradien zu erstellen, indem die Horizontalelemente entsprechend parallel verschoben werden, wobei die Horizontalelemente baugleich bleiben.

Eine weitere Lehre der Erfindung sieht vor, dass der Abstand mit wenigstens einem Abdeckelement abgedeckt ist/wird. Es hat sich gezeigt, dass sich hierdurch auf einfache Weise eine Erhöhung der Auflast durch einbringen von Boden auf die Oberseite des Fundaments erreichen lässt.

Eine weitere Lehre der Erfindung sieht vor, dass der erste Abschnitt Bewehrungen aufweist, die vor Ort eingegossen sind. Diese sind bevorzugt wenigstens teilweise vorgefertigt. Hierdurch kann auf weinfache Weise ein Sockel hergestellt werden, der den notwendigen statischen Anforderungen genügt.

Eine weitere Lehre der Erfindung sieht vor, dass die wenigstens drei Horizontalelemente wenigstens ein Verbindungselement aufweisen, das aus ihrer zum ersten Abschnitt hin gewandten Seite austritt und im ersten Abschnitt vor Ort eingegossen ist. Hierdurch wird auf einfache Weise eine entsprechende einfache und sichere Verbindung der Horizontalelemente mit dem Sockel hergestellt werden.

Eine weitere Lehre der Erfindung sieht vor, dass es sich bei dem wenigstens einen Turmbefestigungselement um einen Ankerkorb handelt.

Nachfolgend wird die Erfindung anhand von Ausführungsbeispielen in Verbindung mit einer Zeichnung näher erläutert. Dabei zeigen:
- Fig. 1: eine seitliche Schnittansicht eines erfindungsgemäßen Fundaments,
- Fig. 2: eine räumliche Ansicht zu Fig. 1,
- Fig. 3: eine räumliche Darstellung eines Ankerkorbs, wie er in der Erfindung beispielhaft verwendet wird in Verbindung mit eine Anschlussflansches eines Turms einer Windkraftanlage,

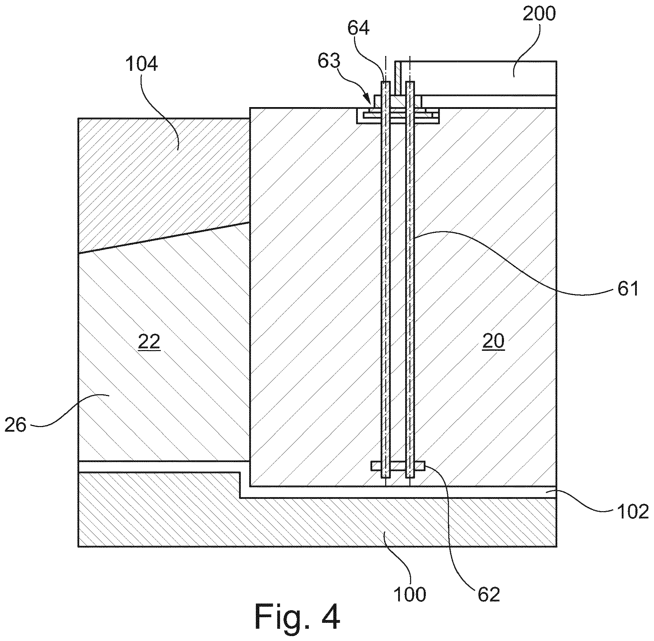

- Fig. 4: eine seitlich geschnittenen vergrößerte Ausschnittsansicht zu Fig. 1
- Fig. 5a bis 5e: Ansichten eines bevorzugten Ausführungsbeispiels eines erfindungsgemäßen Horizontalelements
- Fig. 6 a bis 6c: räumliche Ansichten von erfindungsgemäßen Abdeckelementen, und
- Fig. 7 a bis 7d: schematische Darstellungen von Anordnungsvarianten

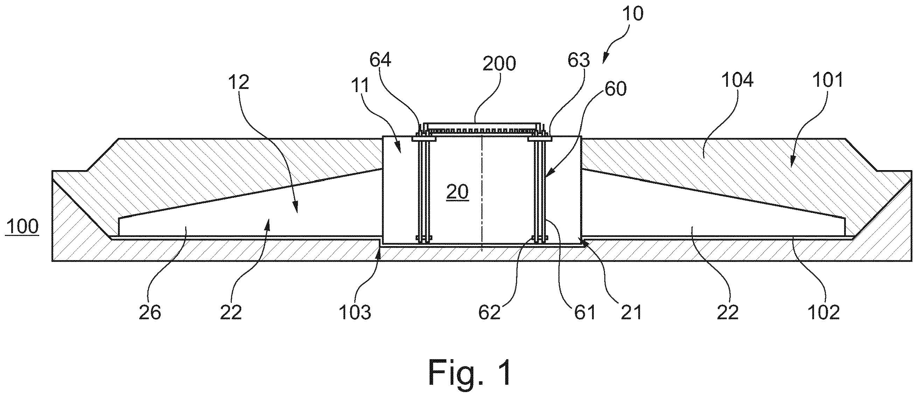

In Fig. 1 ist in geschnittener Ansicht in einer Grube 101 im Boden 100 auf einer Sauberkeitsschicht 102 eine bevorzugte Ausführungsform eines Fundaments 10 angeordnet. Sie weisen einen ersten sockelartigen Abschnitt 11 und einen zweiten flächigen aus Horizontalelementen 22 gebildeten Abschnitt 12 auf. Weiterhin kann auch ein dritter Abschnitt (nicht dargestellt) optional unter dem ersten Abschnitt 11 vorgesehen sein bzw. der erste Abschnitt über den zweiten Abschnitt nach unten erstreckend als Vorsprung 21, ausgeführt sein, die dann jeweils bevorzugt in einer Vertiefung 103 vorgesehen wären.

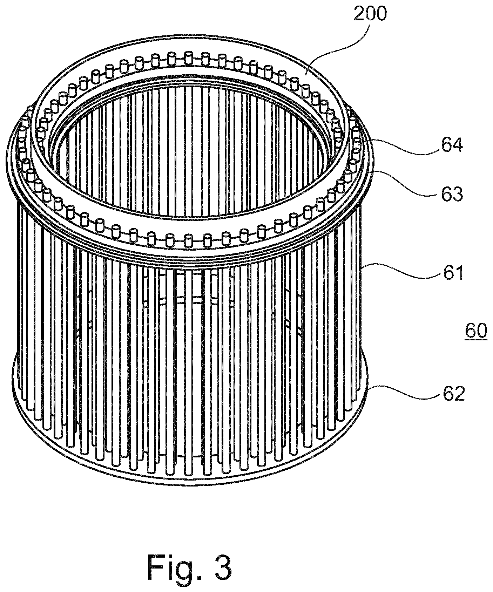

Der erste Abschnitt 11 ist als Sockel 20 ausgeführt. Im Sockel 20 sind als Turmbefestigungselement ein Ankerkorb 60, siehe Figur 3, sowie Bewehrungen (nicht dargestellt). Der Ankerkorb 60 als ein Beispiel für ein Turmbefestigungselement setzt sich aus vertikalen Stäben 61 und jeweils unten und oben angeordneten Ringen 62, 63 zusammen, die fest miteinander verbunden sind. Der obere Ring 63 mit den überstehenden Stababschnitten 64 ragt aus dem Beton des Sockels 20 heraus. Mit diesem Teil des Ankerkorbs wird beispielsweise der Anschlussflansch 200 des Turm der Windkraftanlage verbunden, beispielsweise mittels Verschraubungen.

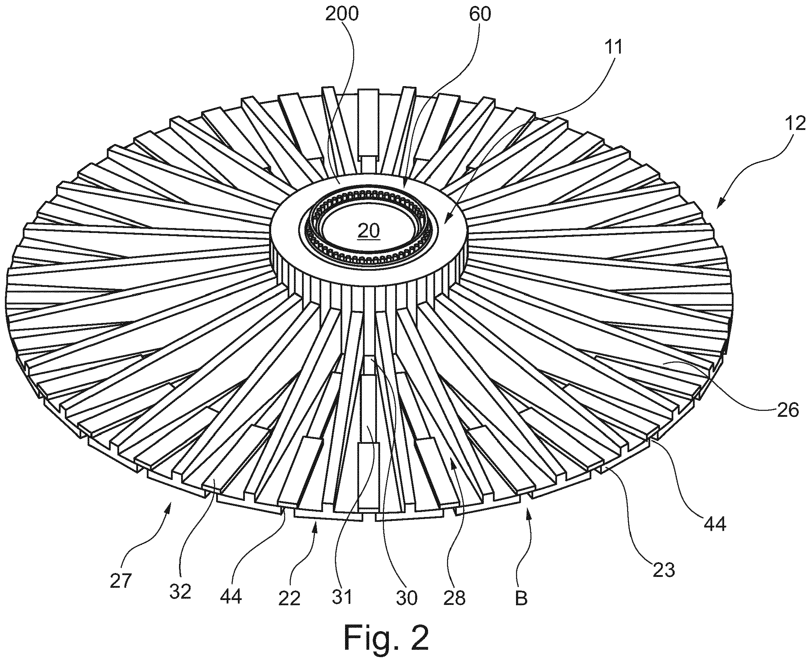

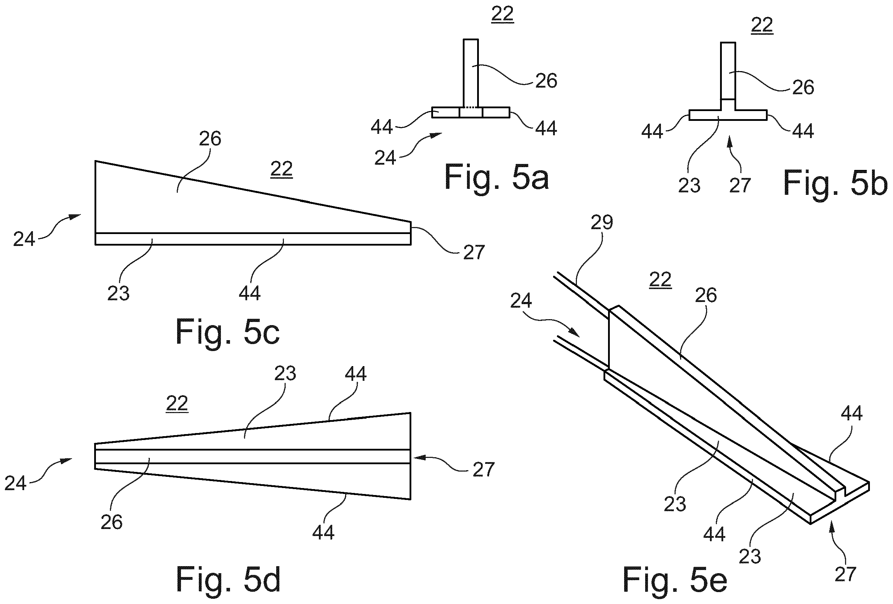

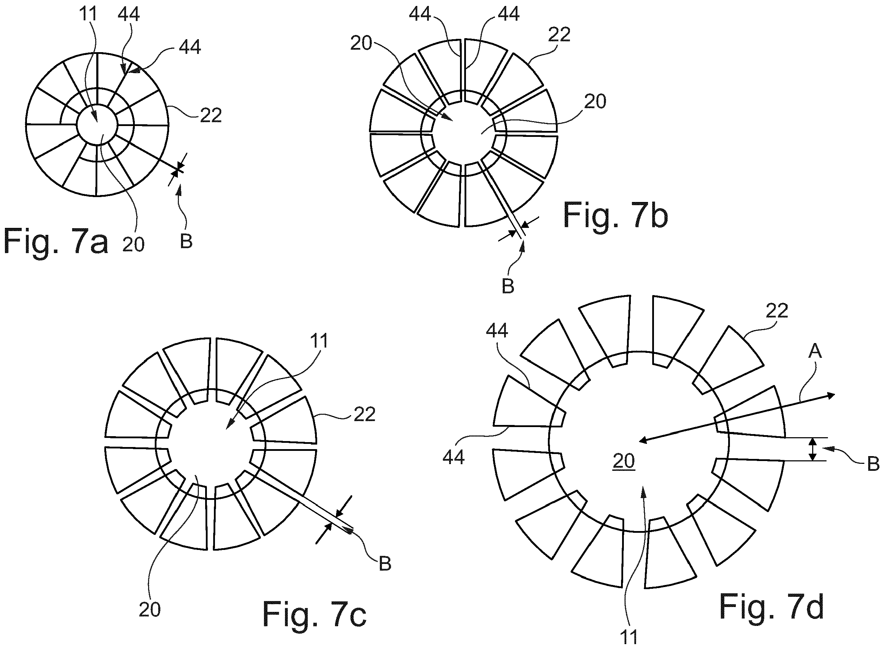

Der zweite Abschnitt 12 ist flächig ausgeführt. Alternativ kann er aber auch eine sternform realisiert werden. Fig.2 zeigt eine räumliche Ansicht des Fundaments 10. Der zweite Abschnitt 12 ist aus Horizontalelementen 22 in Form von Rippenelementen ausgeführt. Diese sind in den Fig. 5a bis 5e dargestellt. Diese erstrecken sich vom Sockel 20 aus gesehen radial nach außen. Sie weisen eine Grundplatte 23 auf, die beispielsweise trapezförmig ausgeführt ist, so dass alle zusammengesetzten Grundplatten eine polygonale Fläche bilden (siehe Fig. 2), die sich einer Kreisform annähert. Alternativ sind auch Kreissegmente (siehe Fig. 7a bis 7d) oder eine Mischform aus Kreissegment und Trapezform möglich. Zwischen Seitenwänden 44 der Grundplatten 23 sind Abstände B vorgesehen, die vom Durchmesser des zu errichtenden Turms abhängig sind.

Rechtwinklig auf der Grundplatte 23 ist eine Versteifungswand 26 angeordnet, deren Höhe beispielsweise hin vom inneren Ende 24 hin zum äußeren Ende 27 der Grundplatte 23 abnimmt. Zwischen zwei benachbarten Versteifungswänden 26 bildet sich ein nach oben offener Hohlraum 28, in den Aufschüttboden 104 einbringbar ist, wodurch eine Auflast auf den zweiten Abschnitt 12 des Fundaments 10 aufbringbar ist.

Am inneren Ende 24 des Horizontalelements sind Verbindungselemente 29 hier bevorzugt in Form von Bewehrungsstäben vorgesehen, die aus der Grundplatte und/oder aus der Versteifungswand 24 austreten und im montierten Zustand in den Sockel beispielsweise in Richtung des Ankerkorbs, hineinragen und mit dem Beton des Sockels 20 eine haltende Verbindung eingehen.

Bevorzugt werden die Abstände B durch Abdeckplatten 30, 31, 32 abgedeckt um eine quasi durchgehende Fläche unterhalb des Hohlraums 28 zu erreichen. Hierdurch wird die Auflastwirkung des Bodens 104 verstärkt.

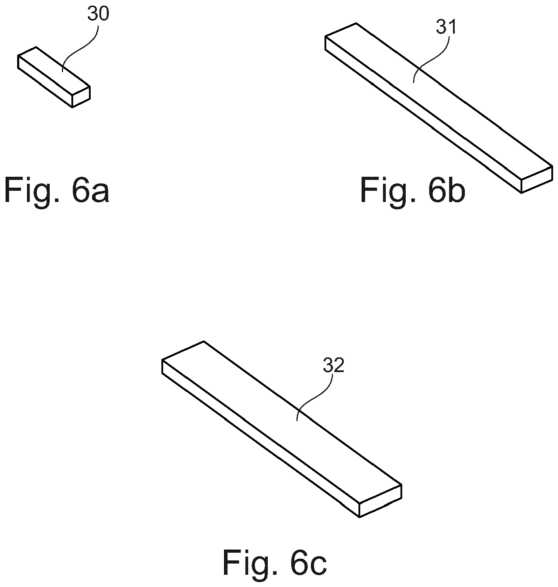

Wie in Fig. 7a bis 7d schematisch dargestellt ist, ist es möglich mit ein und demselben Horizontalelement 22 einen zweiten Abschnitt 12 zu bilden, der unterschiedlich große Sockel 20 aufweist, indem die Horizontalelemente 22 entlang eines vom Mittelpunkt ausgehenden Strahls nach innen oder nach außen verschoben werden, wie dieses in Fig. 7d durch einen Doppelpfeil A dargestellt ist. Nach innen wird dieses dadurch begrenzt, dass sich die Seitenflächen 44 der Grundplatten 23 der Horizontalelemente 22 berühren. Nach außen ist dieses abhängig vom Radius des zu errichtenden Turms (nicht dargestellt) und damit auch dem Radius des Ankerkorbs. Ein Abstand B ist bevorzugt über die gesamte Länge der Seitenflächen 44 vom inneren Ende 24 zum äußeren Ende 27 hin gleich, so dass zwei Seitenflächen 44 parallel zueinander angeordnet sind. Hierdurch können auf einfache Weise bevorzugt mit einem einzigen Horizontalelement 22 Fundamente für Türme mit unterschiedlichen Durchmessern errichtet werden. Der Hohlraum 28 wird dann durch die Abdeckplatten 30, 31, 32 (siehe Fig. 6a -6c) abgedeckt.

Das Fundaments 10 wird errichtet in einer Baugrube 100 beispielsweise auf einer Sauberkeitsschicht 102, indem wenigstens eine Turmbefestigungselement / Ankerkorb 60 im Sockelabschnitt 11 des Fundaments 10 angeordnet wird. Die Horizontalelemente 22 werden radial um das Turmbefestigungselement 60 herum angeordnet, dass jeweils wenigstens ein aus dem Horizontalelement 22 austretendes Verbindungselement 29 in den Sockelabschnitt 11 bzw. das Turmbefestigungselement 60 hineinragt, wobei die Horizontalelemente 22 so angeordnet werden, dass zwischen den Horizontalelementen 22 jeweils ein Abstand B vorhanden ist. Weiterhin werden in den Sockelabschnitt 11 Bewehrungen eingebracht. Diese können beispielsweise bereits vorproduziert sein und als Elemente (nicht dargestellt) eingebracht werden. Weiterhin wird eine Schalung vorgesehen, die den Sockelabschnitt räumlich begrenzt. In diesen Raum wird dann der Ortbeton in die Schalung eingebracht. Die Abstände B werden mit Abdeckelementen 30, 31, 32 zum Hohlraum 28 hin geschlossen. Nach Aushärten des Betons wird beispielsweise die Schalung entfernt. In den Hohlraum 28 wird dann Aufschüttboden 104 als Auflast eingebracht. Anschließend kann der Turm der Windkraftanlage auf dem Sockel 20 in Verbindung mit dem Turmbefestigungselement 60 errichtet werden.

### Bezugszeichenliste

| | | | |
|---|---|---|---|
| 10 | Fundament | | |
| 11 | erster Abschnitt /Sockelabschnitt | A | Verschieberichtung |
| 12 | zweiter Abschnitt | B | Abstand |
| 20 | Sockel | | |
| 21 | Vertiefung | | |
| 22 | Horizontalelement/ Rippenelement | | |
| 23 | Grundplatte | | |
| 24 | Inneres Ende | | |
| 26 | Versteifungswand | | |
| 27 | äußeres Ende | | |
| 28 | Hohlraum | | |
| 29 | Verbindungselement | | |
| 30 | Abdeckplatte | | |
| 31 | Abdeckplatte | | |
| 32 | Abdeckplatte | | |
| 44 | Seitenfläche | | |
| 60 | Ankerkorb | | |
| 61 | Stab | | |
| 62 | unterer Ring | | |
| 63 | oberer Ring | | |
| 64 | Stabende | | |
| 100 | Boden | | |
| 101 | Baugrube | | |
| 102 | Sauberkeitsschicht | | |
| 104 | Aufschüttboden | | |
| 200 | Anschlussflansch | | |

## Patentansprüche

1. Fundament für eine Windkraftanlage mit einem ersten sockelartigen Abschnitt (11) mit wenigstens einem darin befindlichen Turmbefestigungselement (60), auf dem ein Turm der Windkraftanlage anordbar ist und mit dem der Turm der Windkraftanlage verbindbar ist, und einem zweiten sich im Wesentlichen horizontal erstreckenden Abschnitt (12) in Form eines flächigen Fundamentkörpers, wobei der zweite Abschnitt (12) mit dem ersten Abschnitt (11) verbunden ist, wobei der zweite Abschnitt (12) des Fundament (10) im Wesentlichen wenigstens aus drei vorgefertigten Horizontalelementen (22) aus bewehrtem Beton besteht, wobei die wenigstens drei Horizontalelemente (22) jeweils wenigstens einen Bodenabschnitt (23) mit einem sich im Wesentlichen vertikal darauf erstreckenden Versteifungselement (26) aufweisen, und zwischen den Horizontalelementen (22) jeweils ein Abstand (B) vorhanden ist, **dadurch gekennzeichnet, dass** der erste Abschnitt am Errichtungsort der Windkraftanlage aus Beton gegossen ist, dass das Turmbefestigungselement und Bewehrungen am Errichtungsort der Windkraftanlage in den Sockel eingegossen sind, dass die wenigstens drei Horizontalelemente (22) jeweils wenigstens ein Verbindungselement (29) aufweisen, das aus ihrer zum ersten Abschnitt (12) hin gewandten Seite austritt und im ersten Abschnitt (11) vor Ort eingegossen ist, dass der Abstand (B) mit wenigstens einem Abdeckelement (30, 31, 32) abgedeckt ist, und dass ein nach oben offener Hohlraum (28) begrenzt durch zwei Bodenabschnitte (23) zweier benachbarter Horizontalelemente (22), dem wenigstens einen Abdeckelement (30, 31, 32) und den sich im Wesentlichen vertikal darauf erstreckenden Versteifungselemente (26) der zweier benachbarter Horizontalelemente (22) besteht, in den zur Erzeugung einer Auflast Boden (104) einbringbar ist.

2. Fundament nach Anspruch 1, **dadurch gekennzeichnet, dass** es sich bei dem wenigstens einen Verbindungselement (29) um einen Bewehrungsstab handelt.

3. Fundament nach Anspruch 2, **dadurch gekennzeichnet, dass** der Bewehrungsstab aus der Grundplatte (23) oder aus der Versteifungswand (24) austritt und im montierten Zustand in den Sockel (20) hineinragt, und dass mit dem Beton des Sockels (20) eine haltende Verbindung besteht.

4. Fundament nach einem der Ansprüche 1 bis 3, **dadurch gekennzeichnet, dass** es sich bei dem wenigstens einen Turmbefestigungselement um einen Ankerkorb (60) handelt.

5. Verfahren zum Herstellen eines Fundaments für eine Windkraftanlage, mit den Schritten:
Anordnen wenigstens eines Turmbefestigungselements (60) an einem Errichtungsort der Windkraftanlage im Bereich eines zu erstellenden Sockelabschnitts (11)des Fundaments (10),
Anordnen von wenigstens drei im Wesentlichen aus Beton vorgefertigten Horizontalelementen (22) radial um das Turmbefestigungselement (60), so dass jeweils wenigstens ein aus dem Horizontalelement (22) austretendes Verbindungselement (29) in den zu errichtenden Sockelabschnitt (11) hineinragt, wobei die Horizontalelemente (22) so angeordnet werden, dass zwischen den Horizontalelementen (22) jeweils ein Abstand (B) vorhanden ist,
Einbringen von Bewehrung in den Bereich des zu erstellenden Sockelabschnitts (11),
Errichten einer Schalung zur räumlichen Begrenzung des Sockelabschnitts (11),
Erstellen eines Sockelabschnitts (11) durch Einbringen von Ortbeton in die Schalung,
Erstellen eines nach oben offenen Hohlraums (28) begrenzt durch zwei Bodenabschnitte (23) zweier benachbarter Horizontalelemente (22) und den sich im Wesentlichen vertikal darauf erstreckenden Versteifungselemente (26) der zweier benachbarter Horizontalelemente (22), und dem Abdecken des Abstands (B) mit wenigstens einem Abdeckelement (30, 31, 32), und
Einbringen von Boden (104) in den Hohlraum (28).

6. Verfahren nach Anspruch 5, **dadurch gekennzeichnet, dass** es sich bei dem wenigstens einen Turmbefestigungselement um einen Ankerkorb (60) handelt.

7. Verfahren nach Anspruch 5 oder 6, **dadurch gekennzeichnet, dass** es sich bei dem wenigstens einen Verbindungselement (29) um einen Bewehrungsstab handelt.

## Claims

1. Foundation for a wind turbine with a first pedestal-like section (11) with at least one tower fastening element (60) located therein, on which a tower of the wind turbine can be arranged and to which the tower of the wind turbine can be connected, and a second section (12) extending essentially horizontally in the form of a flat foundation body, the second section (12) being connected to the first section (11), the second section (12) of the foundation (10) consisting essentially of at least three prefabricated horizontal elements (22) made of reinforced concrete, the at least three horizontal elements (22) each having at least one base section (23) with a stiffening element (26) extending essentially vertically thereon, and there being a spacing (B) between the horizontal elements (22) in each case, **characterized in that in that** the first section is cast from concrete at the installation site of the wind turbine, **in that** the tower fastening element and reinforcements are cast into the pedestal at the installation site of the wind turbine, **in that** the at least three horizontal elements (22) each have at least one connecting element (29) which emerges from their side facing the first section (12) and is cast into the first section (11) on site, that the distance (B) is covered with at least one cover element (30, 31, 32) , and that an upwardly open cavity (28) is delimited by two base sections (23) of two adjacent horizontal elements (22), the at least one cover element (30, 31, 32) and the stiffening elements (26) of the two adjacent horizontal elements (22) extending substantially vertically thereon, into which floor (104) can be introduced to generate a superimposed load .

2. Foundation according to claim 1, **characterized in that** the at least one connecting element (29) is a reinforcing bar.

3. Foundation according to claim 2, **characterized in that** the reinforcing bar emerges from the base plate (23) or from the stiffening wall (24) and projects into the pedestal (20) in the assembled state, and **in that** there is a retaining connection with the concrete of the base (20).

4. Foundation according to one of claims 1 to 3, **characterized in that** the at least one tower fastening element is an anchor basket (60).

5. Method of manufacturing a foundation for a wind turbine, comprising the steps of:
Arrangement of at least one tower fastening element (60) at an installation site of the wind turbine in the region of a base section (11) of the foundation (10) to be constructed,
Arrangement of at least three horizontal elements (22) substantially prefabricated from concrete radially around the tower fastening element (60), so that in each case at least one connecting element (29) emerging from the horizontal element (22) projects into the pedestal section (11) to be erected, the horizontal elements (22) being arranged in such a way that there is in each case a spacing (B) between the horizontal elements (22),
Inserting reinforcement in the area of the pedestal section (11) to be constructed,
Erecting a formwork for the spatial delimitation of the pedestal section (11),
Creating a pedestal section (11) by placing in-situ concrete in the formwork,
creating an upwardly open cavity (28) defined by two bottom portions (23) of two adjacent horizontal elements (22) and the stiffening elements (26) of the two adjacent horizontal elements (22) extending substantially vertically thereon, and covering the gap (B) with at least one covering element (30, 31, 32), and
Insertion of soil (104) into the cavity (28).

6. Method according to claim 5, **characterized in that** the at least one tower fastening element is an anchor basket (60).

7. Method according to claim 5 or 6, **characterized in that** the at least one connecting element (29) is a reinforcing bar.

## Revendications

1. Fondation pour une éolienne avec une première section (11) en forme de socle avec au moins un élément de fixation de tour (60) se trouvant à l'intérieur, sur lequel une tour de l'éolienne peut être disposée et auquel la tour de l'éolienne peut être reliée, et une deuxième section (12) s'étendant essentiellement horizontalement sous la forme d'un corps de fondation plat, la deuxième section (12) étant reliée à la première section (11), la deuxième section (12) de la fondation (10) étant essentiellement constituée d'au moins trois éléments horizontaux préfabriqués (22) en béton armé, les au moins trois éléments horizontaux (22) présentant chacun au moins une section de fond (23) avec un élément de renforcement (26) s'étendant essentiellement verticalement sur celle-ci, et un espacement (B) étant respectivement présent entre les éléments horizontaux (22), **caractérisé en ce que en ce que** la première section est coulée en béton sur le lieu de construction de l'éolienne, **en ce que** l'élément de fixation de la tour et des armatures sont coulés dans le socle sur le lieu de construction de l'éolienne, **en ce que** les au moins trois éléments horizontaux (22) présentent chacun au moins un élément de liaison (29) qui sort de leur côté orienté vers la première section (12) et qui est coulé sur place dans la première section (11), que la distance (B) est recouverte par au moins un élément de recouvrement (30, 31, 32) , et qu'un espace creux (28) ouvert vers le haut est délimité par deux parties de fond (23) de deux éléments horizontaux (22) voisins, l'au moins un élément de recouvrement (30, 31, 32) et les éléments de renforcement (26) des deux éléments horizontaux voisins (22) qui s'étendent essentiellement verticalement sur celui-ci, dans lequel on peut placer du sol (104) pour créer une surcharge .

2. Fondation selon la revendication 1, **caractérisée en ce que** l'au moins un élément de liaison (29) est une barre d'armature.

3. Fondation selon la revendication 2, **caractérisée en ce que** la barre d'armature sort de la plaque de base (23) ou de la paroi de raidissement (24) et pénètre dans le socle (20) à l'état monté, et **en ce qu'**il existe une liaison de maintien avec le béton du socle (20).

4. Fondation selon l'une des revendications 1 à 3, **caractérisée en ce que** ledit au moins un élément de fixation de tour est une cage d'ancrage (60).

5. Procédé de fabrication d'une fondation pour une éolienne, comprenant les étapes suivantes :
l'agencement d'au moins un élément de fixation de tour (60) sur un site d'érection de l'éolienne dans la zone d'une section de socle (11) à réaliser de la fondation (10),
disposer au moins trois éléments horizontaux (22) préfabriqués essentiellement en béton radialement autour de l'élément de fixation de tour (60), de sorte que respectivement au moins un élément de liaison (29) sortant de l'élément horizontal (22) pénètre dans la section de socle (11) à ériger, les éléments horizontaux (22) étant disposés de telle sorte qu'il existe respectivement une distance (B) entre les éléments horizontaux (22),
Mise en place d'armatures dans la zone de la section de socle (11) à réaliser,
ériger un coffrage pour délimiter dans l'espace la section de socle (11),
Réalisation d'une section de socle (11) par mise en place de béton coulé sur place dans le coffrage,
la création d'un espace creux (28) ouvert vers le haut, délimité par deux parties de fond (23) de deux éléments horizontaux (22) voisins et les éléments de renforcement (26) des deux éléments horizontaux (22) voisins, s'étendant sensiblement verticalement sur ceux-ci, et le recouvrement de l'espacement (B) avec au moins un élément de recouvrement (30, 31, 32), et
mise en place du sol (104) dans la cavité (28).

6. Procédé selon la revendication 5, **caractérisé en ce que** ledit au moins un élément de fixation de tour est une cage d'ancrage (60).

7. Procédé selon la revendication 5 ou 6, **caractérisé en ce que** ledit au moins un élément de liaison (29) est une barre d'armature.
